# EUROPEAN PATENT APPLICATION

(11) **EP 1 452 352 A1**
(43) Date of publication of application: **01.09.2004**
(21) Application number: 04250784.8
(22) Date of filing: 13.02.2004
(51) Int. Cl.: B60G 15/06, F16F 1/04

(54) **Suspension assembly**

(30) Priority: 28.02.2003 US 376851
(71) Applicant: ArvinMeritor Technology, LLC, Troy, Michigan 48084 (US)
(72) Inventor: Bottene, Marlon, Oxford, Michigan 48371 (US); Fader, Joseph, Brighton, Michigan 48114 (US); Saieg,Steven, Sterling Heights, Michigan 48310 (US); Doyle, Stephen, Northville, Michigan 48167 (US); Williams, Monte, Royal Oak, Michigan 48073 (US); Lasic, George, Brampton, Ontario L6W 4M8 (CA); King, Thomas, Milton, Ontario L9T 4M8 (CA)
(74) Representative: Jones, John Bryn

(57) **Abstract**

A suspension assembly (10) is provided that includes a strut (14) connected between a lower control arm (18) and a portion of the vehicle frame or body (12). This strut includes a hydraulic cylinder (24) and rod (28) disposed therein. A first spring seat (30) is arranged on the hydraulic cylinder, and a second spring seat (32) is arranged on the rod spaced from the other spring seat. A spring (38) is arranged between the spring seats to provide a desired suspension load characteristic. At least one of the spring seats extends circumferentially about its connection to either the rod or hydraulic cylinder less than 360°. Since the spring engages the spring seat less than 360 °, a non-uniform force (F3) is produced that generates a moment (M2) in a direction opposite the moment (M1) created by the suspension geometry. In this manner, the friction force at the bearing surface is minimized or eliminated.

## Description

### BACKGROUND OF THE INVENTION

This invention relates to a suspension assembly, and more particularly, the invention relates to a suspension spring arrangement and seat for a McPherson strut assembly.

One type of common suspension assembly is a McPherson strut suspension in which a spring is arranged about a portion of a hydraulic cylinder. The McPherson strut is connected between a portion of a vehicle frame or body and a lower control arm that is connected to the vehicle frame. Typically, the rod extends upward from the hydraulic cylinder to a strut tower where it is attached. A spring is arranged between a lower spring seat, typically affixed to the upper portion of the hydraulic cylinder, and upper spring seat that is typically connected to an end of the rod.

Prior art spring seats are arranged circumferentially an entire 360° from the central connection. That is, the spring seats are disc-shaped, and are connected to the hydraulic cylinder and the rod at their center. The spring can engage the entire 360° surface of the spring seats.

A McPherson strut is subjected to a moment created by the geometry of the strut that generates an inboard force at the upper portion of the strut. The force generates undesirable friction between the strut piston and the bearing resulting in a sticking suspension feel. This undesirable friction also generates a lateral load at the bearing surface that must be accommodated when designing the strut. It is desirable to provide a strut assembly that eliminates or minimizes the undesirable moment that creates a sticking suspension while reducing the lateral load at the bearing surface.

### SUMMARY OF THE INVENTION AND ADVANTAGES

The present invention provides a suspension assembly including a strut connected between a lower control arm and a portion of the vehicle frame or body. The strut includes a hydraulic cylinder and rod disposed therein. A first spring seat is arranged on the hydraulic cylinder, and a second spring seat is arranged on the rod spaced from the first spring seat. A spring is arranged between the spring seats to provide a desired suspension load characteristic. At least one of the spring seats extends circumferentially about its connection to either the rod or hydraulic cylinder less than 360°. Since the spring engages the spring seat less than 360 °, a non-uniform force is produced circumferentially on the spring seat that generates a moment in a direction opposite the moment created by the suspension geometry. In this manner, the friction force at the bearing surface is minimized or eliminated. A C-shaped spring may also be used to enhance the counteracting movement.

Accordingly, the above invention provides a strut assembly that eliminates or minimizes the undesirable moment that creates a sticking suspension while reducing the lateral load at the bearing surface.

### BRIEF DESCRIPTION OF THE DRAWINGS

Other advantages of the present invention can be understood by reference to the following detailed description when considered in connection with the accompanying drawings wherein:
Figure 1 is a schematic view of the present invention suspension assembly;
Figure 2 is a schematic view of a McPherson strut with the present invention spring seat arranged at a lower spring seat location;
Figure 3 is a schematic view of a McPherson strut with the present invention spring seat arranged at the upper spring seat location;
Figure 4 is a McPherson strut with the present invention spring seat arranged at both the upper and lower spring seat locations; and
Figure 5 is a schematic view of a bowed spring for use with the present invention McPherson strut.

### DETAILED DESCRIPTION OF THE PREFERRED EMBODIMENT

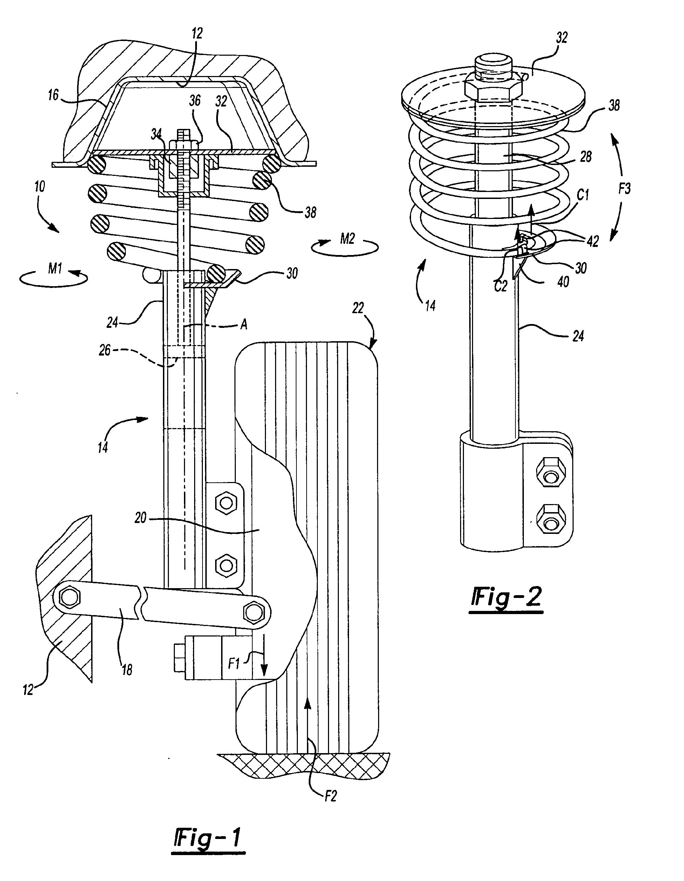

A suspension assembly 10 is shown in Figure 1. The assembly 10 is a McPherson strut suspension configuration. A strut 14 is arranged between a vehicle frame or body 12 and a lower control arm 18. More specifically the upper attachment of the strut 14 may be at a strut tower 16 defined by the vehicle body. The lower portion of the strut 14 may include a knuckle 20 that is connected to an outer end of the lower control arm 18 for supporting a wheel end 22 by a spindle, as is known in the art.

The strut 14 includes a hydraulic cylinder 24 with a piston 26 arranged therein for damping the loads generated at the wheel end 22. A rod 28 extends from the piston 26 and is connected to the strut tower 16. A first force F1 is generated at the connection between the lower control arm 18 and the knuckle 20, and a second force F2 is generated at the wheel end 22 generating a first moment in an inboard direction. The first moment M1 generates an undesirable friction between the piston 26 and the hydraulic cylinder 24 and between the rod 28 and rod bearing (not shown).

The strut 14 includes a lower spring seat 30 typically attached to the hydraulic cylinder 24. An upper spring seat 32 is spaced from the lower spring seat 30 and is connected to an end 34 of the rod 28 by a nut 36. A spring 38 is arranged between the spring seats 30 and 32 to generate a spring load providing a desired suspension characteristic. In the prior art, the spring 38 generates a load uniformly circumferentially about an entire 360° of the spring seats about the spring and rod axis A producing the force F1.

The present invention utilizes one or more spring seats at the lower 30, upper 32 and/or both spring seats. At least one of the spring seats 30 and 32 extends circumferentially about the axis A less than 360°. Preferably, the spring seat forms an arcuate portion between 240° and 360°. Of course, the spring seat may extend circumferentially about the axis A any number of degrees less than 360°. At least two contact points between the spring 38 and arcuate spring seat generates a non-uniform force F3 producing a second moment M2 that counteracts the first moment M1 to negate or minimize the undesirable friction between the piston 26 and hydraulic cylinder 24.

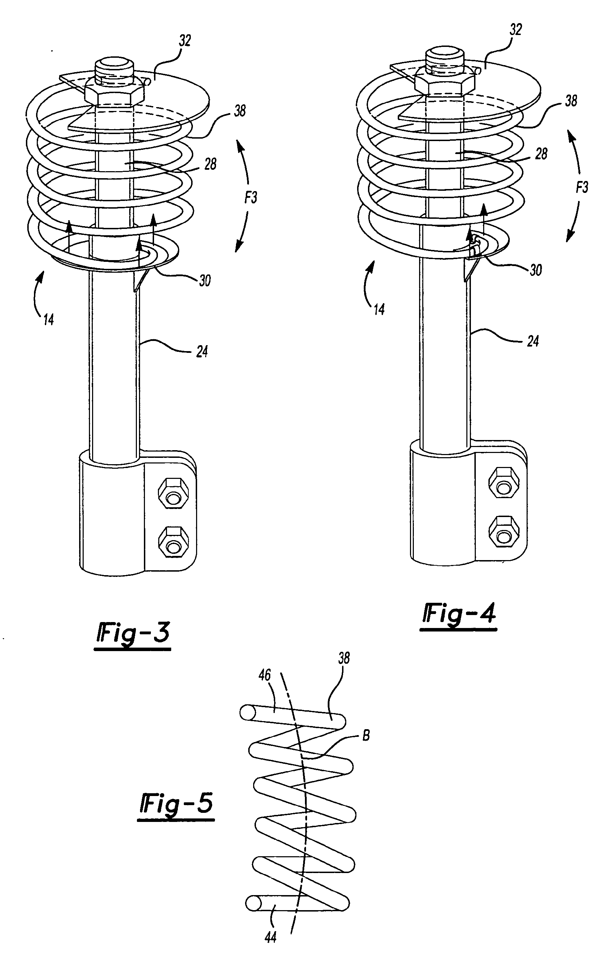

As shown in Figure 2, the arcuate spring seat may be used for the lower spring seat, or alternatively, may be used for the upper spring seat, as shown in Figure 3. Moreover, the arcuate spring seat of the present invention may be used for both the upper and lower spring seats, as shown in Figure 4. Clamps 42 may be used to attach the spring 38 to one or more of the spring seats to maintain the orientation of the spring relative to the spring seats to ensure that the desired contact points C1 and C2 are retained. Moreover, reinforcements 40 may be used with the arcuate spring seat to withstand the increased force over the reduced spring seat area.

Referring to Figure 5, a bowed spring may be used having opposing spring ends 44 and 46 that extend to one side relative to the central portion of the spring 38 along a curved axis B. Once the spring 38 is installed between the spring seats 30 and 32, the spring 38 is preferably concentric with the strut axis A.

The invention has been described in an illustrative manner, and it is to be understood that the terminology that has been used is intended to be in the nature of words of description rather than of limitation. Obviously, many modifications and variations of the present invention are possible in light of the above teachings. It is, therefore, to be understood that within the scope of the appended claims the invention may be practiced otherwise than as specifically described.

## Claims

1. A strut suspension assembly (14) comprising:
a hydraulic cylinder (24) having a piston (26) disposed therein;
a rod (28) connected to said piston extending from said hydraulic cylinder with a first moment producing a lateral load between said rod and said hydraulic cylinder;
a first spring seat supported on said rod;
a second spring seat supported on said hydraulic cylinder spaced from said rod;
a spring (38) arranged between said spring seat providing an axis (A); and
wherein at least one of said spring seats extends circumferentially about said axis less than 360° with said spring coacting with said at least one of said spring seats producing a second moment in a direction opposite said first moment, and wherein said one of said spring seats forms an arcuate portion between 240° and 360°.

2. A suspension assembly (10) comprising:
vehicle support structure (12);
a lower control arm (18) pivotally connected to said vehicle support structure;
an upper attachment (16) provided by said vehicle structure;
a strut (14) connected between said lower control arm and said upper attachment with a first moment producing a lateral load at said upper attachment;
first and second spaced apart spring seats (30, 32) arranged on said strut;
a spring (38) arranged between said first and second spring seats providing an axis (A); and
wherein at least one of said spring seats extends circumferentially about said axis less than 360° with said spring coacting with said at least one of said spring seats producing a second moment in a direction opposite said first moment, and wherein said one of said spring seats forms an arcuate portion between 240° and 360°.

3. The assembly according to claim 1 or 2, wherein said one of said spring seats is a lower spring seat (30).

4. The assembly according to Claim 1 or 2, wherein said one of said spring seats is an upper spring seat (32).

5. The assembly according to any preceding claim, wherein said spring and said rod are coaxial relative to one another, said spring having an arcuate engagement with said at least one of said spring seats at said arcuate portion.

6. The assembly according to any preceding claim, wherein a non-uniform force is provided by said spring about said axis on said one of said spring seats.

7. The assembly according to any preceding claim, wherein at least one clamp secures said spring to one of said first and second spring seats.

8. The assembly according to any preceding claim, wherein said one of said first and second spring seats is a lower spring seat and another of said one of said first and second spring seats is an upper spring seat.

9. The assembly according to any preceding claim, wherein said spring includes an uncompressed state defining a C-shape.

10. The assembly according to any preceding claim, wherein reinforcements are secured between said one of said spring seats and one of said hydraulic cylinder and said rod.
